# FASCICULE DE BREVET EUROPEEN

(11) **EP 2 362 368 B1**
(45) Date de publication et mention de la délivrance du brevet: **28.01.2015**
(21) Numéro de dépôt: 11155741.9
(22) Date de dépôt: 24.02.2011
(51) Int. Cl.: G08C 19/28, G05B 15/02, H04L 12/28

(54) **Affectation de scénarios à des boutons de commande**
Szenariozuteilung zu Steuertasten
Allocating scenarios to control buttons

(30) Priorité: 25.02.2010 FR 1051348
(43) Date de publication de la demande: 31.08.2011
(73) Titulaire: Somfy SAS, 74300 Cluses (FR)
(72) Inventeur: Duchene, Isabelle, 74970, Marignier (FR); Lagarde, Eric, 74700, Sallanches (FR); Mugnier, Mickaël, 74800 Saint Pierre en Faucigny (FR)
(74) Mandataire: Bugnion Genève

(56) Documents cités:
- EP-A1- 1 816 620
- EP-A1- 1 847 975
- US-A1- 2006 044 175

## Description

L'invention concerne le domaine de la commande à distance sans fil d'équipements domotiques assurant des fonctions de confort et/ou de sécurité dans un bâtiment. Ces équipements sont par exemple des protections solaires, des volets roulants, des fermetures, des luminaires, des moyens de chauffage ou climatisation, des dispositifs d'alarme incendie ou vol.

Quand le nombre d'équipements devient important, il est connu de commander ceux-ci non pas individuellement mais par scénario. A un scénario correspond l'envoi d'ordres vers les équipements ou au moins certains d'entre eux, afin de disposer chacun dans une configuration prédéfinie, par exemple enregistrée dans un moyen de commande. Cette configuration est par exemple une position ouverte ou fermée, une position intermédiaire, un niveau d'éclairement, une température de consigne, une activation ou une désactivation du système d'alarme.

Un scénario est donc défini par les identifiants des équipements concernés et par la configuration de chacun d'entre eux, relativement audit scénario, ces informations étant par exemple logées dans une table de la mémoire du moyen de commande.

Le moyen de commande est en général un dispositif complexe, puisqu'il doit permettre non seulement d'activer des scénarios mais aussi d'enregistrer ceux-ci, ce qui nécessite en général une interface homme-machine élaborée, du type clavier et écran, afin de sélectionner les différents équipements participant au scénario et de leur affecter la configuration choisie. Dans le domaine des télécommandes universelles pour appareils multimédia (téléviseurs et analogues), il est connu de simplifier la constitution de la télécommande en lui affectant un nombre limité de touches de commande.
Par exemple, le brevet US 5,243,430 décrit une télécommande universelle ne comprenant que quatre touches de commande, des émetteurs infrarouge pour émettre de manière omnidirectionnelle et un récepteur infrarouge pour recevoir, dans un mode d'apprentissage, les codes émis par la télécommande d'origine.
De manière un peu similaire, la demande de brevet US2005/0174253 décrit une télécommande de forme discoïde représentant une face de « Smiley », équipée d'une seule touche de commande.
La demande de brevet US 2008/0172695 décrit également une télécommande discoïde de profil elliptique.
Ces dispositifs sont programmés à partir de télécommandes existantes : la télécommande universelle ne fait pas autre chose qu'enregistrer, pour le reproduire par la suite, un signal émis par une télécommande d'origine de l'équipement, quand on appuie sur une touche de la télécommande d'origine.

Dans le cas de télécommandes présentant au contraire une interface de commande complexe, il est connu d'utiliser les facilités offertes par un ordinateur personnel pour servir de moyen de programmation.

Le brevet US 6,909,378 décrit une méthode d'aide à la programmation touche par touche d'une télécommande universelle comprenant de nombreuses touches de commande à l'aide d'un ordinateur. L'ordinateur est raccordé à un serveur internet et à un émetteur infrarouge permettant d'émettre des signaux de commande vers la télécommande universelle de manière à ce que celle-ci apprenne les codes d'une télécommande d'origine, éventuellement perdue. La télécommande d'origine est remplacée par la lecture de fichier sur internet ou sur un disque de sauvegarde. La télécommande universelle peut se trouver dans un état vierge avant configuration. Plusieurs variantes d'apprentissage sont proposées. De manière itérative, on sélectionne à la fois une touche de la télécommande universelle et un code de commande sur l'ordinateur, ce code étant alors transmis à la télécommande universelle qui l'enregistre en relation avec la touche sélectionnée. Dans un mode de réalisation permettant un usage facile et intuitif, il y a affichage sur l'écran de l'ordinateur d'au moins une partie de clavier de la télécommande universelle. L'utilisateur peut alors remplacer l'appui sur les touches réelles de la télécommande universelle par le pointage sur les touches virtuelles de la représentation, la liste des commandes pouvant elle-même être remplacée par une représentation iconique des commandes. Il s'agit donc d'affecter à chaque itération une commande pré-existante à une touche.
Le brevet EP 1 058 921 décrit l'émulation d'une télécommande universelle sur un écran d'ordinateur. Cette télécommande (« Pronto ») comprend à la fois des touches mécaniques (« Hard keys ») et une interface graphique utilisateur (GUI) basée sur un écran LCD sensitif, pour la commande d'équipements électroniques tels que téléviseur, magnétoscope, lecteurs de CD ou DVD, préamplificateurs audio et tuners etc. L'ordinateur est équipé de moyens d'édition permettant de créer ou modifier la configuration de la télécommande, notamment de boutons logiciels (« Soft Keys ») disposés sur l'interface graphique utilisateur. L'émission de commandes par la télécommande réelle ou par un émetteur connecté à l'ordinateur est possible lorsque la souris de l'ordinateur (ou un autre moyen à la disposition de l'utilisateur) active les boutons de l'écran émulant la télécommande réelle.

Le brevet US 7,266,777 décrit également la configuration par ordinateur d'une télécommande du type précédent. Des commandes peuvent être assignées à la fois aux boutons logiciels et aux touches mécaniques. Quatre touches mécaniques sont en particulier programmables pour supporter des macros ou autres fonctions à configurer. Par utilisation d'un « glisser-déposer » (« Drag & Drop ») il est possible de sélectionner une commande par sa représentation iconique et l'affecter à une des touches mécaniques représentées sur une partie d'écran d'un ordinateur.

Le brevet US 6,211,870 décrit une télécommande programmable par ordinateur dans le but de réduire la complexité des dispositifs existants. Bien que l'art antérieur décrit fasse état d'un besoin de commander non seulement des équipements multimédia mais aussi des équipements domotiques (éclairage, air conditionné) le document s'adresse exclusivement aux équipements multimédia.

Il est connu du brevet US 6,791,467 d'utiliser un Assistant Digital Personnel (PDA) pour commander à distance plusieurs équipements domotiques dans une habitation. Les équipements sont représentés par des icônes sur l'écran sensitif du PDA. Quand un équipement est sélectionné, une représentation de son panneau de contrôle apparaît sur l'écran sensitif. Un appui sur une touche virtuelle provoque l'émission de la commande correspondante.
La demande de brevet US 2009/024778 décrit également une télécommande de type PDA permettant le contrôle de nombreux équipements domotiques. Ce document laisse une part importante à l'utilisateur pour configurer à sa convenance les nombreux contrôles à sa disposition, définir des instructions de type « macro » concernant non seulement des équipements multimédia mais aussi d'éclairage ou de climatisation, en fonction de leur localisation. Les touches de commande sont toutes virtuelles et peuvent être configurées sur l'interface graphique utilisateur du PDA.

Le brevet US 5,995,106 décrit une interface graphique utilisateur intuitive, permettant de visualiser l'icône représentative de chaque objet commandable dans un fond d'écran représentatif de sa localisation. La programmation de commandes est réalisée en sélectionnant l'icône de l'objet et en sélectionnant la télécommande selon une technique de roue animée proche de la technique « Cover Flow ».

Le brevet US 6,212,439 décrit un ordinateur personnel muni d'un clavier auxiliaire comprenant 8 touches de commande et une touche de menu. Un utilisateur ignorant les techniques informatiques peut lancer l'exécution d'un programme spécifique de l'ordinateur simplement en appuyant sur une des touches de commande. Alternativement, l'exécution peut être lancée à partir d'une télécommande non représentée. Dans une phase de configuration, l'utilisateur affecte un programme à une touche de commande en sélectionnant sur l'écran de l'ordinateur une icône du programme et en faisant glisser celle-ci jusqu'à un bouton représentatif d'une touche de commande du clavier auxiliaire. Il s'agit donc d'un raccourci permettant l'activation d'un programme d'ordinateur, choisi parmi plusieurs programmes disponibles installés à l'avance, à partir d'un clavier auxiliaire ou d'une télécommande déportée, et non d'une fonctionnalité permettant à l'utilisateur de créer son propre scénario de commande.

Concernant des équipements domotiques liés au bâti, la demande de brevet FR 08/06940 décrit un système comprenant un dispositif de commande muni d'un écran servant en particulier à la visualisation d'icônes représentatives d'équipements. Il existe une étape de réglage d'un paramètre de l'équipement tel que désiré dans la construction du scénario, dans laquelle le paramètre est ajusté : soit par action directe sur l'équipement avec l'un de ses moyens de commande, soit par action sur le dispositif de commande en modifiant l'apparence de l'icône représentative de l'équipement.

La demande de brevet EP 1 816 620 décrit une télécommande nomade comprenant au moins un bouton spécifique permettant l'exécution d'un scénario tandis que d'autres boutons permettent de commander directement les équipements qui sont appairés à la télécommande. L'appui sur le bouton spécifique provoque l'émission d'un ordre spécifique vers un relais, qui interprète cet ordre spécifique comme un ordre de lancement de scénario et le traduit en ordres de commande vers les différents équipements. Le scénario est défini au niveau du relais, qui comprend une interface utilisateur munie de boutons de configuration et d'un moyen d'information de l'utilisateur tel qu'un écran.

La demande de brevet FR 0957430 décrit un boîtier de télécommande nomade programmable comprenant trois touches et pouvant servir à l'activation d'un scénario de commande de plusieurs équipements. Ce document ne décrit pas la méthode mise en oeuvre pour la programmation de la télécommande nomade.

Le document EP1 847 975 décrit un procédé de test et d'installation d'une télécommande au moyen d'une télécommande virtuelle qui peut être utilisée pour enregistrer un ou plusieurs scénarios de fonctionnement. Ce document ne décrit pas le type de touches de la télécommande.

A l'exception des trois documents précédents, les documents de l'art antérieur décrivent donc : soit des télécommandes universelles nomades simples, ne comportant que quelques touches mécaniques pour la commande, mais destinées uniquement à reproduire des commandes existantes de télécommandes d'équipements multimédia, soit des télécommandes nomades programmables mais complexes car munies d'interface graphique utilisateur.
Il existe pourtant un besoin de contrôle facile des équipements liés au bâti dans une habitation. Un occupant d'une maison n'a pas du tout le même comportement vis-à-vis d'équipements multimédia et vis-à-vis d'équipements liés au bâti : de manière générale, il accepte une certaine complexité dans le premier cas tandis qu'il la refuse dans le second, même lorsqu'il est habitué aux techniques informatiques. Une explication tient dans le paradoxe : « plus l'équipement est durable, plus il doit être simple à utiliser ».

A plus forte raison, les personnes âgées peuvent se faire aider par un installateur ou par un de leurs enfants pour configurer une télécommande selon leur souhait, mais il est indispensable que cette télécommande soit aussi simple que possible. En particulier, un écran est à peine toléré pour l'affichage (en gros caractères) de messages. Des voyants sont d'avantage admis pour un retour d'information aussi simple que possible (vert : exécution correcte de l'ordre, rouge : problème).

Enfin, un contrôle très facile des équipements permet d'envisager un coût réduit pour la télécommande nomade programmable. Dans ce cas, plusieurs télécommandes nomades programmables peuvent être installées dans l'habitation. Une télécommande programmable est alors affectée à chaque pièce dans laquelle différents types d'équipements liés au bâti peuvent être commandés simultanément sous forme d'un scénario. Ainsi, la simplicité d'usage provient du fait de trouver, dans chaque pièce, la télécommande adaptée à des scénarios de sécurité ou de confort dont le besoin ne peut se faire sentir que dans la pièce en question.

Selon l'invention, le procédé de commande d'une installation formée d'une pluralité d'équipements domotiques liés à un bâtiment, et y assurant, selon le type d'équipement domotique, des fonctions de confort thermique et visuel, telles que des fonctions de chauffage-climatisation, de ventilation naturelle, d'éclairage, de protection solaire, et/ou des fonctions de sécurité, telles que des fonctions de fermetures et/ou d'alarme, les équipements domotiques communiquant sur un même réseau domotique, comprend :
- une étape de connexion à un outil de programmation, d'une télécommande programmable munie d'un moyen de communication avec le réseau domotique et munie d'une interface de commande comprenant uniquement une ou plusieurs touches mécaniques, dont au moins une touche d'exécution de scénario,
- une étape de découverte de l'installation, dans laquelle des identifiants des équipements domotiques de l'installation sont fournis à l'outil de programmation,
- une étape de définition, dans l'outil de programmation, d'un scénario de commande impliquant plusieurs équipements domotiques, dits équipements du scénario,
- une étape d'affectation du scénario de commande à une touche d'exécution de scénario,
- une étape d'utilisation autonome de la télécommande programmable, dans laquelle il y a émission d'ordres de commande définis dans le scénario de commande, depuis la télécommande programmable vers les équipements du scénario, suite à un appui sur la touche d'exécution de scénario,
et, dans l'étape d'utilisation autonome de la télécommande, il y a émission, depuis la télécommande programmable vers les équipements domotiques du scénario, d'ordres d'arrêt d'exécution du scénario de commande lors d'un appui d'arrêt sur une touche mécanique ayant lieu pendant une durée (T0) d'exécution de scénario.

Selon l'invention, dans l'étape de découverte, l'outil de programmation peut utiliser le moyen de communication de la télécommande programmable pour émettre une requête de découverte et pour recevoir les identifiants des équipements domotiques fournis par les équipements domotiques de l'installation

Selon l'invention, si la télécommande programmable comprend une touche spécifique, dédiée à l'émission d'ordres d'arrêt, l'appui d'arrêt sur cette touche peut provoquer l'émission d'ordres d'arrêt, y compris après la durée d'exécution de scénario.

Selon l'invention, les ordres d'arrêt d'exécution du scénario peuvent être des ordres d'arrêt quand ils concernent un actionneur de mouvement d'un équipement domotique, et peuvent être des ordres de changement d'état quand ils concernent un actionneur d'éclairage d'un équipement domotique.

Selon l'invention, les ordres d'arrêt d'exécution du scénario peuvent être adaptés selon la durée (T1) séparant un début d'exécution et un appui d'arrêt et/ou selon la durée (T2) de l'appui d'arrêt.

Selon l'invention, l'étape de définition du scénario de commande peut comprendre :
- l'affichage, sur une interface graphique utilisateur de l'outil de programmation, d'icônes d'équipements et/ou de groupes d'équipements, chaque icône d'équipement étant représentative d'un des équipements domotiques dont l'outil de programmation a reçu les identifiants et chaque icône de groupe d'équipements étant représentative d'un groupe prédéfini d'équipements domotiques de même type dont l'outil de programmation a reçu les identifiants,
- la sélection d'un ordre de commande,
- la sélection d'une icône d'équipement, ou de plusieurs icônes d'équipement, ou d'une icône de groupe d'équipements,
- la formation d'une instruction de commande comprenant à la fois l'ordre de commande et l'identifiant de l'équipement domotique associé à l'icône d'équipement ou les identifiants des équipements domotiques associés aux icônes d'équipement ou de groupe d'équipements,
- l'enregistrement de l'instruction de commande dans une liste d'instructions de commande impliquant plusieurs équipements et constituant le scénario de commande.

Selon l'invention, l'étape de définition de scénario peut comprendre également l'affichage, sur l'interface graphique utilisateur, d'une icône de scénario affectée à la liste d'instructions constituant le scénario.

Selon l'invention, l'étape d'affectation du scénario de commande à l'une des touches d'exécution de scénario peut comprendre :
- le transfert, depuis l'outil de programmation vers la télécommande programmable, du scénario de commande, et
- l'enregistrement du scénario de commande dans une mémoire de scénario de la télécommande programmable,
- ce transfert comprenant également un identifiant de la touche d'exécution de scénario et cet enregistrement utilisant l'identifiant de la touche d'exécution de scénario pour adresser la mémoire de scénario, quand la télécommande programmable comprend plus d'une touche d'exécution de scénario.

Selon l'invention, le transfert du scénario de commande peut être précédé par une affectation virtuelle du scénario de commande à la touche d'exécution de scénario, comprenant :
- l'affichage d'une représentation des touches d'exécution de scénario sur l'interface graphique, en sus de l'icône de scénario, un bouton logiciel de l'interface graphique correspondant à chaque touche d'exécution de scénario,
- une sélection commune de l'icône de scénario et d'un bouton logiciel.

Selon l'invention, une étape de connexion à un outil de programmation peut comprendre le transfert d'un scénario de commande depuis la télécommande programmable vers l'outil de programmation lorsqu'une télécommande programmable a déjà subi une étape d'affectation du scénario de commande à l'une des touches d'exécution de scénario.

Selon l'invention, le procédé de commande peut comprendre une étape préalable de transfert d'une clé d'authentification, commune à tous les équipements domotiques de l'installation, depuis une télécommande déjà présente dans l'installation vers la télécommande programmable.

Selon l'invention, la télécommande programmable peut comprendre au plus deux touches d'exécution de scénario.

Selon l'invention, la télécommande programmable est munie d'un moyen de communication avec un réseau domotique d'une installation formée d'une pluralité d'équipements domotiques liés à un bâtiment, y assure, selon le type d'équipement domotique, des fonctions de confort thermique et visuel, telles que des fonctions de chauffage-climatisation, de ventilation naturelle, d'éclairage, de protection solaire et/ou des fonctions de sécurité, telles que des fonctions de fermeture et/ou d'alarme, ladite télécommande met en oeuvre le procédé tel que décrit ci-dessus, est munie:
- de moyens de connexion avec un outil de programmation,
- de moyens de transmission sur le réseau domotique d'ordres de commande provenant de l'outil de programmation,
- de moyens d'enregistrement d'un scénario de commande dans une mémoire de scénario, suite à réception du scénario de commande depuis l'outil de programmation,
elle est munie d'une interface de commande comprenant uniquement une ou plusieurs touches mécaniques, dont au moins une touche d'exécution de scénario, en relation avec la mémoire de scénario, elle comprend des moyens logiques de traitement aptes à provoquer l'émission sur le réseau domotique d'ordres de commande contenus dans la mémoire de scénario en relation avec une touche d'exécution de scénario lors d'un appui sur une touche d'exécution de scénario et les moyens logiques de traitement sont de plus tels qu'un appui sur une touche mécanique provoque l'émission sur le réseau domotique d'ordres d'arrêt mettant fin à l'exécution du scénario, lors d'un appui d'arrêt sur une touche mécanique ayant lieu pendant une durée (T0) d'exécution de scénario.

Selon l'invention, les ordres d'arrêt mettant fin à l'exécution du scénario peuvent être des ordres d'arrêt de mouvement adressés spécifiquement aux actionneurs de mouvement définis dans le scénario ou adressés à l'ensemble des actionneurs connus de la télécommande programmable.

Selon l'invention, les moyens logiques de traitement peuvent de plus être tels que les ordres d'arrêt mettant fin à l'exécution du scénario sont des ordres de changement d'état quand ils sont émis vers des équipements domotiques d'éclairage.

Selon l'invention, les ordres d'arrêt d'exécution du scénario peuvent être adaptés selon la durée (T1) séparant un début d'exécution et un appui d'arrêt et/ou selon la durée (T2) de l'appui d'arrêt.

Selon l'invention, la télécommande programmable peut comprendre au plus deux touches d'exécution de scénario.

Selon l'invention, les moyens logiques de traitement peuvent de plus être tels qu'un appui sur une touche d'exécution de scénario provoque l'émission sur le réseau domotique d'une commande spécifique, tant qu'aucun enregistrement d'ordres de commande n'a été réalisé dans la mémoire de scénario.

L'invention sera mieux comprise par l'homme du métier grâce à la description détaillée de plusieurs modes d'exécution en relation avec les dessins associés, dans lesquels :
La figure 1 représente une installation, comprenant une télécommande programmable selon l'invention, et un outil de programmation mettant en oeuvre le procédé de commande selon l'invention.
La figure 2 représente une première configuration d'écran de l'outil de programmation.
La figure 3 représente une deuxième configuration d'écran de l'outil de programmation.
La figure 4 représente le procédé de commande selon l'invention.
La figure 5 représente une première variante et une deuxième variante du procédé de commande.
La figure 6 représente une troisième variante et une quatrième variante du procédé de commande.
La figure 7 représente une cinquième, une sixième et une septième variante du procédé de commande.

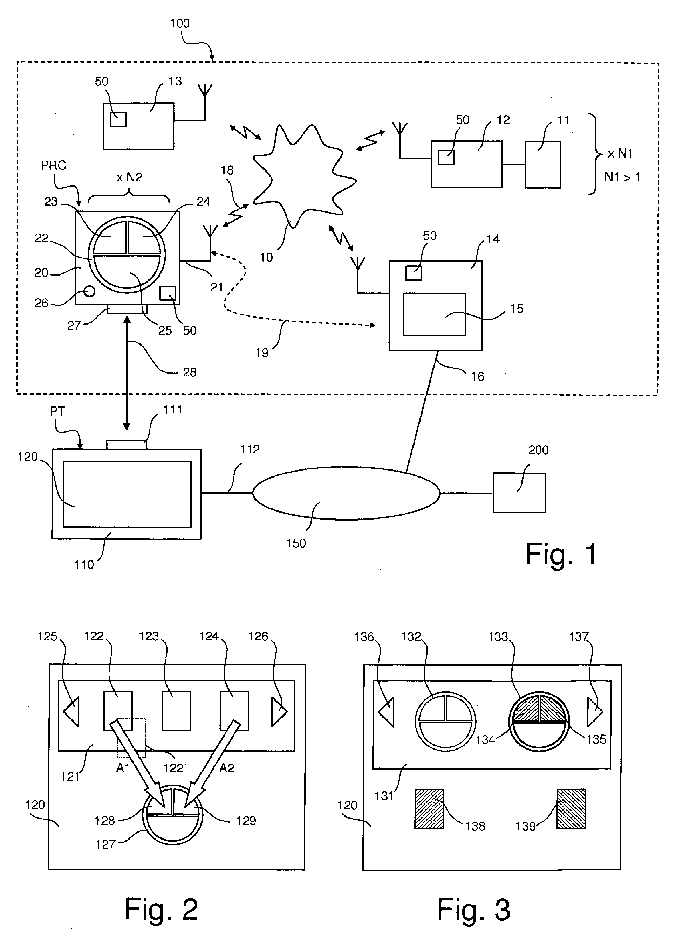

La figure 1 représente une installation 100, comprenant une télécommande programmable 20 selon l'invention, et un outil de programmation 110 mettant en oeuvre le procédé de commande selon l'invention.
L'installation 100 comprend un réseau de communication domotique 10 permettant la communication entre équipements domotiques et émetteurs d'ordres. Le réseau de communication domotique est préférentiellement de type sans fil, par ondes radiofréquences. Alternativement tout type de réseau de communication peut être utilisé, par exemple par courants porteurs sur les lignes de distribution électrique. Un équipement domotique 11 communique sur le réseau domotique à l'aide d'un récepteur d'ordres 12. Préférentiellement, la communication est de type bidirectionnel, afin de pouvoir envoyer des messages relatifs à la bonne réception et/ou à la bonne exécution des ordres reçus. L'installation comprend N1 (N1>1) équipements domotiques, dont un seul est représenté par souci de simplification. Selon leur type, les équipements domotiques assurent, dans un bâtiment, des fonctions de confort thermique et visuel (chauffage-climatisation, ventilation naturelle, éclairage, protection solaire) et/ou de sécurité (fermetures, alarme). Certains équipements domotiques comprennent donc un actionneur de mouvement, non représenté. L'installation comprend également des émetteurs d'ordres. Un émetteur d'ordres 13 émet des ordres de commande vers les équipements domotiques en utilisant le réseau domotique. L'émetteur d'ordres est de type télécommande nomade ou murale, munie de moyens de commande non représentés. Alternativement l'émetteur d'ordres comprend un capteur, par exemple météorologique, de confort, de présence ou de sécurité. Préférentiellement, la communication avec un émetteur d'ordres est de type bidirectionnel.
L'installation comprend une passerelle 14, munie d'un écran tactile 15, permettant la communication vers un réseau Internet 150 par une première liaison internet 16. L'écran tactile sert par exemple à configurer la passerelle. La passerelle peut être dépourvue d'écran tactile si elle est configurée avec un autre moyen, par exemple un PDA ou un téléphone mobile équipé d'un moyen de communication Bluetooth également implanté sur la passerelle.
Alternativement, l'installation ne comporte pas de passerelle. L'invention s'applique notamment au cas où l'installation est dépourvue de passerelle, mais elle trouve également son intérêt dans le cas où une passerelle est déjà présente dans l'installation.

Tous les dispositifs autorisés à communiquer sur le réseau domotique partagent une clé commune d'authentification 50, enregistrée dans chaque dispositif.

L'installation comprend enfin au moins une télécommande programmable 20 selon l'invention.
Elle comprend préférentiellement une ou plusieurs télécommandes programmables qui peuvent être affectées à des pièces différentes et/ou à des utilisateurs différents.

La télécommande programmable comprend un moyen de communication 21 avec le réseau domotique. Les échanges avec le réseau domotique sont représentés par des double-flèches 18.

Aussi bien pour des raisons de coût que pour des raisons de facilité d'utilisation, la télécommande programmable est donc choisie de manière à présenter la structure la plus simple possible. En particulier, l'interface de commande 22 de la télécommande ne comprend que des touches mécaniques créant sans ambiguïté une sensation spécifique d'appui.
Par touche mécanique, on entend une touche dont l'activation se traduit par un retour sensitif sur le doigt de l'utilisateur activant la touche, ce retour sensitif étant lié à une variation des propriétés mécaniques de la touche mécanique (position, raideur, etc.).
Par exemple, le retour sensitif sur le doigt est provoqué par le déplacement de la touche lors d'une pression du doigt sur celle-ci, déplacement qui est décelé par un circuit électrique ou électronique. Un moyen élastique ramène alors la touche mécanique en position de repos quand cesse la pression sur la touche.

Alternativement, mais avec un coût plus élevé, un autre exemple de touche mécanique est celui d'une touche fixe munie d'un moyen vibratoire piézo-électrique reconstituant, par contact avec le doigt, la sensation d'effort et d'enfoncement. Le moyen vibratoire piézo-électrique sert à la fois de capteur et d'émetteur du retour sensitif sur le doigt de l'utilisateur.
Par contre, une simple touche à effleurement n'est pas une touche mécanique au sens de l'invention. De même une représentation de touche sur un écran tactile, même animée par l'effleurement, n'est pas une touche mécanique.

Une première touche mécanique est une première touche d'exécution de scénario 23. Une deuxième touche mécanique est une deuxième touche d'exécution de scénario 24. Une troisième touche mécanique est une touche spécifique 25, ne servant pas à la commande d'exécution de scénario. La touche spécifique est par exemple une touche commune servant en particulier à commander l'arrêt d'un scénario en cours d'exécution.
Alternativement, la télécommande programmable ne comprend qu'une seule touche d'exécution de scénario ou, au contraire, plus de deux touches d'exécution de scénario mais préférentiellement en nombre limité pour éviter les risques de confusion. De même la télécommande programmable peut comporter plus d'une touche spécifique ou, au contraire, aucune touche spécifique.

La télécommande programmable comprend un moyen d'affichage, ne servant en aucun cas de moyen de commande. Il s'agit par exemple d'une ou plusieurs LED, ou encore d'un petit écran permettant la visualisation de pictogrammes simples. La télécommande programmable comprend également un moyen d'enregistrement de la clé commune d'authentification 50.

Enfin la télécommande programmable comprend un moyen de connexion 27 par un média 28 à un outil de programmation 110, non affecté à l'installation mais utilisé pour la programmation de la télécommande programmable. Le médium 28 est préférentiellement de type filaire, selon la norme USB (Universal Serial Bus) ou 12C. Alternativement, le médium est sans fil, par exemple de type infrarouge (IRDA) ou radiofréquences (Bluetooth).

L'outil de programmation est un ordinateur personnel, par exemple de type « Tablette ». Il comprend un moyen de connexion 111 au médium 28 et une interface graphique utilisateur 120 (GUI) de type écran tactile. Alternativement, l'interface graphique utilisateur comprend un écran, un clavier et/ou un moyen de pointage, tel qu'une souris, d'objets sur l'écran.
L'outil de programmation comprend également une deuxième liaison internet 150 permettant d'accéder à des ressources sur le réseau internet.

Pour illustrer des étapes du procédé décrit par la suite, la figure 2 représente une première configuration d'écran de l'outil de programmation. Cette première configuration est exploitée lors de l'affectation virtuelle d'un scénario de commande à chacune des touches d'exécution de scénario de la télécommande programmable.
Sur une première fenêtre de défilement 121 de l'interface graphique utilisateur, apparaissent des icônes de scénario 122-124 relatives à des scénarios de commande enregistrés dans l'outil de programmation. Chaque icône représente une liste d'instructions de commande comprenant des ordres de commande préalablement affectés à divers équipements domotiques de l'installation.
Une première icône de scénario 122 est relative à un premier scénario de commande. Une deuxième icône de scénario 123 est relative à un deuxième scénario de commande. Une troisième icône de scénario 124 est relative à un troisième scénario de commande. D'autres scénarios de commande peuvent avoir été enregistrés dans l'outil de programmation. Un premier bouton de défilement gauche 125 permet de provoquer un glissement des icônes de scénario vers la gauche, la première icône 122 disparaissant et une nouvelle icône apparaissant là où était la troisième icône 124. Inversement, un premier bouton de défilement droit 126 permet de provoquer un défilement des icônes vers la droite.
Préférentiellement, un nom de scénario de commande est associé à chaque icône de scénario.

Ainsi, l'outil de programmation est apte à stocker et à faire apparaître sous forme d'icônes un grand nombre de scénarios définis par l'utilisateur. Le stockage a lieu de manière durable dans une mémoire non volatile de l'outil de programmation, ou associée à l'outil de programmation (disque dur externe, disque optique, clé USB). Alternativement, le stockage est réalisé sur un serveur externe 200 relié au réseau internet 150.

Sur l'interface graphique utilisateur 120 apparaît également une représentation de l'interface de commande 127 de la télécommande programmable en cours de programmation. A cette représentation est associée un premier bouton logiciel 128 et un deuxième bouton logiciel 129, chaque bouton logiciel couvrant respectivement la représentation de chaque touche d'exécution de scénario. La sélection commune d'une icône de scénario et d'un bouton logiciel provoque l'enregistrement, dans l'outil de programmation, d'un lien entre la liste de commandes du scénario et d'un identifiant de la touche d'exécution de scénario. De manière virtuelle, le scénario est alors affecté à la touche d'exécution de scénario.
Préférentiellement, la sélection simultanée a lieu par action de type « Glisser-Déposer » (« Drag & Drop »), comme représenté par la flèche A1 : le doigt de l'utilisateur touche l'écran tactile au niveau de la première icône de scénario 122, ce qui la sélectionne, puis glisse sur l'écran, accompagné d'un double 122' de cette icône, jusqu'à déposer le double de l'icône au dessus du premier bouton logiciel 128, ce qui le sélectionne. De la même façon, une action A2 de type « Glisser-Déposer » permet d'affecter virtuellement le troisième scénario de commande à la deuxième touche d'exécution de scénario en sélectionnant la troisième icône de scénario 124 et en faisant glisser son double jusqu'au deuxième bouton logiciel 129.

La figure 3 représente une deuxième configuration d'écran de l'outil de programmation, illustrant également le procédé décrit plus loin.
Sur une deuxième fenêtre de défilement 131 de l'interface graphique utilisateur 120, apparaissent des icônes de télécommandes programmables 132 et 133. Préférentiellement, un nom est associé à chaque télécommande programmable pour expliciter quel est son utilisateur ou à quelle pièce du bâtiment elle est affectée.

Un deuxième bouton de défilement gauche 136 permet de provoquer un glissement des icônes de télécommande vers la gauche. Inversement, un deuxième bouton de défilement droit 137 permet de provoquer un défilement des icônes vers la droite.

Quand une icône de télécommande est sélectionnée, par exemple par appui du doigt sur l'écran tactile au niveau de cette icône, celle-ci apparaît en surbrillance et les icônes de scénario affectées à chaque touche d'exécution de scénario deviennent également affichées sur l'écran. Ainsi, l'icône de télécommande 133 étant sélectionnée, l'interface graphique utilisateur 120 affiche une quatrième icône de scénario 138 correspondant à un scénario de commande affecté à une première touche de lancement de scénario 134 de cette télécommande et affiche une cinquième icône de scénario 139 correspondant à un scénario de commande affecté à une deuxième touche de lancement de scénario 135 de cette télécommande.

Ainsi, l'outil de programmation est apte à stocker et à faire apparaître sous forme d'icônes un grand nombre de télécommandes programmables programmées par l'utilisateur. Le stockage a lieu de manière durable comme précédemment décrit.

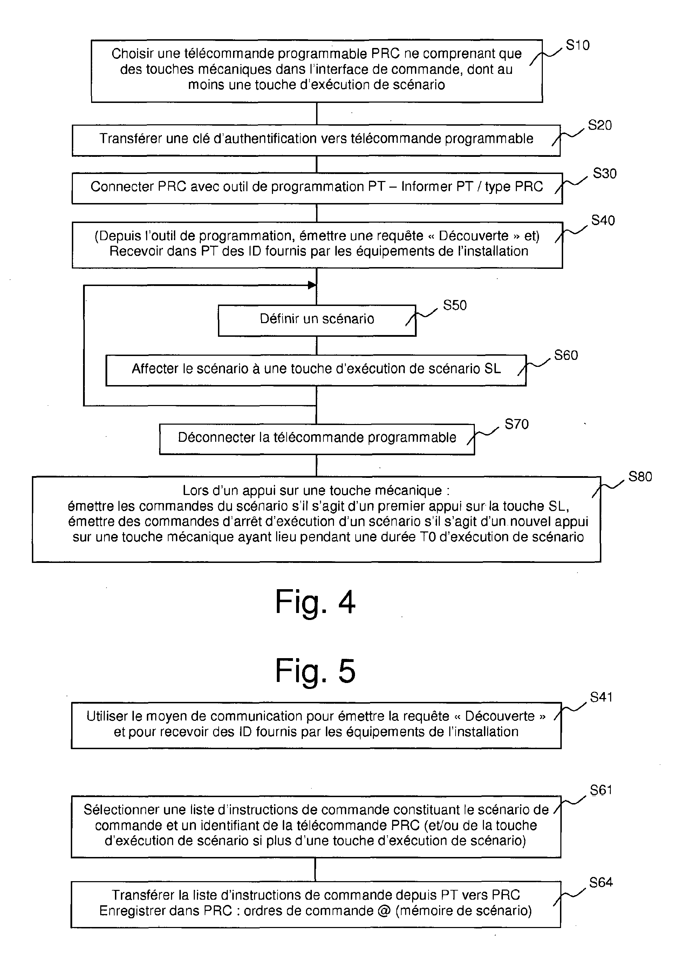

La figure 4 représente sous forme d'enchaînement d'étapes le procédé de commande selon l'invention.
Dans une première étape S10, on choisit au moins une télécommande programmable 20, notée PRC, présentant les caractéristiques décrites ci-dessus. Dans une deuxième étape S20, la clé d'authentification commune aux dispositifs de l'installation est transférée à la télécommande programmable. Préférentiellement, ce transfert de clé a lieu par communication sur le réseau domotique entre l'émetteur d'ordres 13, possédant déjà la clé d'authentification commune 50, et la télécommande programmable 20. Le transfert de clé peut être sécurisé en imposant qu'un récepteur d'ordres participe à l'opération de transfert de clé.

Dans une troisième étape S30, la télécommande programmable est connectée à un outil de programmation, noté PT. Préférentiellement, cette connexion a lieu de manière filaire à l'aide de connecteurs USB de la télécommande programmable et de l'outil de programmation. Le type et un identifiant ID' de télécommande programmable sont alors transmis à l'outil de programmation.
Ayant constaté la présence de la connexion, l'outil de programmation provoque, dans une quatrième étape S40, l'émission sur le réseau domotique d'une requête de découverte (« Discovery Request »). Alternativement, cette requête est émise par la télécommande programmable quand elle constate sa connexion à l'outil de programmation. Dans tous les cas, les identifiants ID de chaque équipement domotique de l'installation, répondant à la requête de découverte, sont reçus et stockés au sein de l'outil de programmation.

A ce stade, l'outil de programmation dispose d'une liste d'équipements de l'installation. Il dispose en outre d'une information sur le type de télécommande programmable et sur son identifiant. De plus, l'outil de programmation dispose d'une liste de commandes et/ou contient des routines de modification virtuelle de paramètres d'un équipement d'un type donné et de détermination d'ordres de commande à envoyer vers cet équipement pour modifier lesdits paramètres. Toutes ces routines sont comprises dans un logiciel de traitement de l'outil de programmation ou sont comprises dans une base de données accessible par l'outil de programmation, par exemple le serveur 200.
Dans une cinquième étape S50, un scénario de commande est défini.
Dans une sixième étape S60, le scénario de commande est affecté à une des touches d'exécution de scénario de la télécommande programmable. La cinquième et/ou la sixième étape sont réalisées en utilisant les méthodes décrites dans l'art antérieur et/ou, préférentiellement, en utilisant les variantes décrites plus bas.
Ces étapes sont itérées pour différentes touches d'exécution de scénario correspondant au type de télécommande programmable utilisé.

Dans une septième étape S70, la télécommande programmable est déconnectée, soit par débranchement d'une connexion filaire, soit en mettant fin à une connexion sans fil. Son utilisation autonome est alors permise.
Dans cette utilisation autonome, décrite par une huitième étape S80, un appui sur une touche d'exécution de scénario provoque l'émission, vers différents équipements de l'installation, des ordres de commande définis dans le scénario affecté à cette touche. Par contre, un nouvel appui sur une touche mécanique ayant lieu pendant une durée T0 d'exécution de scénario est considéré comme un appui d'arrêt et provoque l'émission d'ordres mettant fin à l'exécution du scénario. La durée d'exécution de scénario peut être fixée par une temporisation prédéterminée, par exemple 15 secondes ou 30 secondes selon la durée normale la plus longue d'exécution d'un ordre par un équipement domotique. La temporisation prédéterminée est par exemple activée lors de l'émission des premiers ordres de commande du scénario.
Préférentiellement, la durée d'exécution de scénario débute avec l'émission des premiers ordres de commande du scénario et se termine par la réception par la télécommande programmable d'un dernier message de confirmation de bonne exécution de commande de la part d'un dernier équipement impliqué dans le scénario.
Un appui d'arrêt est donc un appui sur une des touches d'exécution de scénario, de durée quelconque mais ayant lieu pendant la durée d'exécution de scénario.
Un appui d'arrêt est également un appui sur une touche spécifique, dédiée à l'émission d'ordres d'arrêt. Un appui sur cette touche spécifique peut provoquer l'émission d'ordres d'arrêt, y compris s'il a lieu après la durée d'exécution de scénario. Par contre, un nouvel appui sur une touche d'exécution de scénario ne provoque l'émission d'ordres d'arrêt que si cet appui se produit pendant la durée T0 d'exécution de scénario.
Ainsi, au-delà de cette durée, la touche d'exécution de scénario redevient disponible pour commander l'exécution du scénario.
L'intérêt de disposer d'une touche spécifique dédiée à l'émission d'ordres d'arrêt est de permettre l'émission d'ordres d'arrêt vers des équipements domotiques activés par une autre télécommande ou par un dispositif de contrôle automatisé. Il est alors possible à tout instant d'émettre des ordres d'arrêt vers tous les équipements domotiques connus de la télécommande programmable.

L'ensemble du procédé est itéré pour différentes télécommandes programmables destinées à être utilisées dans l'installation. Alternativement, certaines étapes sont inversées (par exemple les deuxième et troisième étapes), ou regroupées (par exemple la première et la troisième étape), ou encore l'étape de définition de scénarios est itérée sur une pluralité de scénarios, chaque scénario étant affecté par la suite à une touche d'exécution de scénario d'une ou de plusieurs télécommandes programmables, comme représenté aux figures 2 et 3.

Le procédé de commande est préférentiellement utilisé en combinaison avec les variantes qui suivent.

La figure 5 représente une première variante et une deuxième variante du procédé de commande.
La première variante comprend une sous-étape S41 de la quatrième étape. Préférentiellement, c'est le moyen de communication de la télécommande programmable PRC qui est utilisé par l'outil de programmation pour provoquer l'émission de la commande de découverte et au moins pour provoquer la réception des identifiants ID des équipements de l'installation. Ainsi, l'outil de programmation PT n'a pas à disposer de moyens propres de communication avec le réseau domotique.

En complément de cette première variante, la deuxième étape de transfert de clé d'authentification peut être provoquée, au niveau de la télécommande programmable, par une commande de l'outil de programmation s'il y a inversion de la deuxième et de la troisième étape. De la sorte, il est inutile que la télécommande programmable soit munie d'une touche dédiée à l'entrée dans un mode de transfert de clé d'authentification.

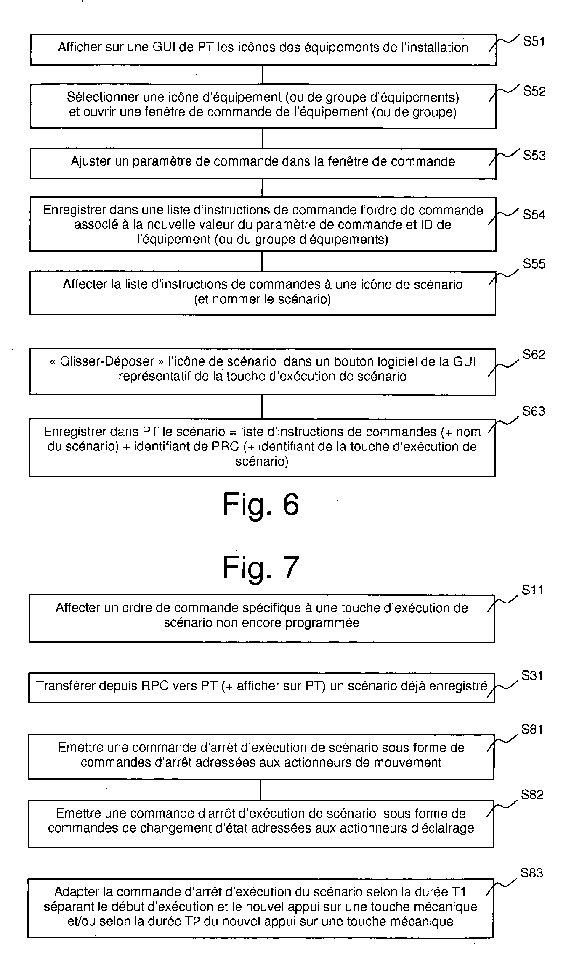

La deuxième variante comprend l'enchaînement de deux sous-étapes S61 et S64 de la sixième étape du procédé. Dans une première sous-étape S61, on sélectionne un scénario de commande comprenant, sous forme de listes ou de tableaux, les instructions de commande du scénario de commande (à chaque ordre de commande étant associé l'identifiant de l'équipement domotique concerné par cet ordre de commande pour constituer une instruction de commande), ainsi qu'un identifiant de la télécommande programmable et un identifiant de la touche de scénario si la télécommande programmable comprend plus d'une touche d'exécution de scénario. Dans une quatrième sous-étape S64, les instructions du scénario de commande sont transférées depuis l'outil de programmation PT vers la télécommande programmable PRC et y sont enregistrées dans une mémoire de scénario. Quand plusieurs touches d'exécution de scénario existent dans la télécommande, l'adresse d'enregistrement des instructions de commande du scénario dans la mémoire de scénario tient compte de l'identifiant de la touche d'exécution de scénario.
Quand les instructions de commande ne comprennent que des identifiants des équipements (cas traité plus bas en relation avec la figure 7), l'enregistrement de ces identifiants destinataires peut avoir lieu dans une mémoire commune de la télécommande programmable.

Lors d'essais du scénario de commande, par exemple avant le début de la septième étape, les ordres de commande du scénario peuvent de même être émis par le moyen de communication, suite à une commande d'exécution du scénario provoquée sur l'outil de programmation, ou encore suite à l'activation directe d'une touche mécanique.

La figure 6 représente en premier lieu une troisième variante du procédé de commande, relative à la cinquième étape et précisant le mode préféré de définition d'un scénario de commande à l'aide d'icônes. Dans une première sous-étape S51, on affiche sur l'écran de l'interface graphique utilisateur, des icônes représentatives de chaque équipement de l'installation. Ces icônes apparaissent sous forme générique, avec un graphique d'icône par type d'équipement, et avec un nom d'équipement associé à l'icône, le nom permettant à l'utilisateur de localiser l'équipement dans son environnement. Le nom de chaque équipement a été transmis par l'équipement en réponse à la requête de découverte.

Alternativement, l'icône d'équipement est représentative de l'état actuel de l'équipement (ouvert, fermé, position intermédiaire etc.).
Dans cette sous-étape, il est également possible de constituer des groupes d'équipements de même type, en leur associant une même icône de groupe d'équipements et en nommant ce groupe d'équipements.
Alternativement, les équipements ont eux-mêmes communiqué, lors de l'étape de découverte, une information relative à leur appartenance individuelle à un ou plusieurs groupes d'équipements.
Dans une deuxième sous-étape S52, l'utilisateur sélectionne une icône d'équipement, par exemple par un appui du doigt sur l'écran tactile au niveau de l'icône. Cette action a pour effet d'ouvrir une fenêtre de commande de l'équipement. La fenêtre de commande de l'équipement fait apparaître celui-ci de manière plus détaillée, avec notamment un ou plusieurs boutons de réglage d'un paramètre de l'équipement : par exemple pour un store vénitien, un bouton de réglage d'orientation des lames du store et un bouton de réglage de déploiement du tablier.
Dans une troisième sous-étape S53, au moins un des paramètres est ajusté, virtuellement, en agissant sur le bouton de réglage correspondant. Dans une quatrième sous-étape S54, l'ordre de commande, ou les ordres de commande, permettant d'obtenir la valeur souhaitée de paramètre sont enregistrés dans une liste de commandes, en relation avec l'identifiant de l'équipement domotique. Dans une cinquième sous-étape S55, cette liste de commandes est affectée à une icône de scénario. Plusieurs modèles d'icônes de scénario sont mis à la disposition de l'utilisateur qui en choisit un et lui affecte le nom de son choix. Ces quatre sous-étapes peuvent de même s'appliquer simultanément à plusieurs icônes d'équipements de même type, ayant fait l'objet d'une sélection commune ou encore à une icône de groupe d'équipements.

La figure 6 représente également une quatrième variante du procédé de commande, relative à la sixième étape et précisant le mode d'affectation d'un scénario de commande à une touche d'exécution de scénario, à l'aide d'icônes. Dans une deuxième sous-étape S62, faisant suite à la première sous-étape S61 de la figure 5 ou se substituant à celle-ci, une icône de scénario telle que créée comme expliqué plus haut, puis un bouton logiciel de l'interface graphique utilisateur représentatif d'une touche d'exécution de scénario sont sélectionnés à l'aide d'une action de « Glisser-Déposer » de l'icône scénario dans le bouton logiciel. Faisant suite à cette action de sélection commune par l'utilisateur, une troisième sous-étape S63 provoque l'enregistrement dans l'outil de programmation d'un lien entre la liste d'instructions de commandes du scénario et l'identifiant de la touche d'exécution du scénario.
Si la télécommande programmable ne comprend qu'une seule touche d'exécution de scénario, l'identifiant de la touche d'exécution de scénario est par exemple remplacé par l'identifiant de la télécommande programmable. A l'issue de cette sous-étape, il y a affectation virtuelle du scénario de commande à la touche d'exécution de scénario. La troisième sous-étape S63 précède alors la quatrième sous-étape S64 de la figure 5, dans laquelle l'affectation virtuelle devient affectation réelle.

La figure 7 représente une cinquième, une sixième et une septième variante du procédé de commande.

La cinquième variante comprend une sous-étape préliminaire S11 relative au choix de l'état de la télécommande programmable avant sa programmation. Dans cette sous-étape, réalisée par exemple au stade de fabrication de la télécommande programmable, on affecte une commande spécifique prédéterminée à une touche d'exécution de scénario non encore programmée avec un outil de programmation. Cette commande spécifique peut comporter simplement un identifiant de touche, qui sera émis lors d'un appui sur la touche. Dans ce cas, la télécommande programmable peut très bien être utilisée directement, sans programmation autre qu'un appairage, pour commander un équipement (ou un groupe d'équipements) auquel cette télécommande serait appairée. Préférentiellement, la télécommande programmable peut être utilisée avec un équipement de l'installation servant de relais et apte à lancer l'exécution d'un scénario sur réception d'une commande issue de la télécommande programmable, comme décrit dans la demande de brevet EP 1 816 620. La passerelle 14 est par exemple ce type d'équipement et la liaison pointillée 19 explicite ce mode de fonctionnement sur la figure 1.

Ainsi, une même télécommande programmable peut servir à l'exécution d'un scénario programmé par l'utilisateur et affecté à une touche d'exécution de scénario :
- soit par enregistrement des commandes du scénario dans la télécommande elle-même,
- soit par enregistrement des commandes du scénario dans un dispositif de l'installation servant de relais, et muni par exemple de ses propres moyens de définition du scénario.

Cette variante donne donc une grande souplesse d'utilisation de la télécommande programmable, selon le degré d'équipement de l'installation dans laquelle elle-est insérée. Bien entendu, un processus de réinitialisation permet de remettre dans un état « non programmé » défini par la sous-étape S11 une télécommande programmable déjà programmée antérieurement.

De la même façon, la télécommande programmable possède alternativement un état « non programmé » d'origine, identique à celui d'une télécommande non programmable. Par exemple chacune de trois touches mécaniques d'exécution de scénario est initialement affectée à un seul ordre de commande lors de la fabrication : un ordre de montée, un ordre d'arrêt, un ordre de descente. L'outil de programmation est alors utilisé soit pour modifier complètement le contenu de la mémoire de scénario en relation avec les touches d'exécution de scénario, comme décrit précédemment par le procédé de l'invention, soit pour simplement affecter à cette télécommande une liste d'identifiants d'équipements destinataires ou un identifiant de groupe destinataire, comme il est connu de l'art antérieur. Dans ce cas, le transfert depuis l'outil de programmation vers la télécommande programmable ne comprend que des données relatives à ces identifiants, qui peuvent être enregistrés au sein de la télécommande programmable dans une mémoire commune, distincte de la mémoire de scénario.

La sixième variante comprend une sous-étape S31 relative à la connexion de la télécommande programmable avec un outil de programmation. Lors de cette connexion, un scénario déjà enregistré dans la télécommande programmable est transmis à l'outil de programmation, si cette télécommande programmable a déjà fait l'objet d'une programmation antérieure. Le scénario est affiché sur l'outil de programmation. Sur l'interface graphique utilisateur de l'outil de programmation, la télécommande programmable (et les icônes de scénario associées) apparaît par exemple en surbrillance comme représenté en figure 3, mais seule. Cette variante permet par exemple d'éditer un scénario de commande existant pour lui apporter quelques modifications.

La septième variante comprend trois sous-étapes précisant la huitième étape, lors d'un fonctionnement autonome de la télécommande programmable.
Dans une première sous-étape S81, la commande d'arrêt d'exécution du scénario comprend l'émission de commandes d'arrêt vers les équipements comprenant des actionneurs de mouvement impliqués dans le scénario en cours d'exécution.
Dans une deuxième sous-étape S82, la commande d'arrêt d'exécution du scénario comprend l'émission d'une commande de changement d'état, par exemple une commande « Toggle », vers les équipements domotiques comprenant des actionneurs d'éclairage impliqués dans le scénario en cours d'exécution. En effet, si l'actionneur d'éclairage est commandé simplement en un état alimenté et un état non alimenté, l'exécution de la commande est immédiate. L'arrêt d'exécution du scénario nécessite le plus souvent un retour à l'état antérieur pour pallier un inconfort ressenti lors de l'exécution du scénario. Par exemple quand l'utilisateur a activé l'exécution d'un scénario « économie d'énergie » sans se rendre compte qu'il allait se trouver immédiatement dans l'obscurité, il est utile que l'arrêt d'exécution du scénario rétablisse l'éclairage de la pièce.

La première sous-étape S81 peut être implantée dans le procédé de commande sans que la deuxième sous-étape S82 soit implantée.

L'arrêt d'exécution d'un scénario répond à une nouvelle commande de l'utilisateur qui peut s'interpréter de différentes manières, notamment en fonction du temps de réaction de l'utilisateur, c'est à dire la durée T1 s'écoulant entre le début d'exécution et le nouvel appui sur une touche mécanique ou appui d'arrêt. A cet effet, une troisième sous-étape S83 adapte la nature de l'ordre d'arrêt d'exécution du scénario, selon ce temps de réaction.
Par exemple, une réaction quasiment immédiate, c'est-à-dire un temps de réaction inférieur par exemple à un seuil de 2 secondes, est révélatrice d'une erreur de manipulation de l'utilisateur quand il a lancé le scénario. Par exemple, l'utilisateur constate qu'il a activé la première touche d'exécution de scénario alors qu'il aurait souhaité activer la deuxième touche d'exécution de scénario. Dans le cas d'un temps de réaction court, il convient donc non seulement de mettre fin aux ordres en cours d'exécution, mais encore de replacer tous les équipements domotiques dans leur état initial. La commande d'arrêt d'exécution du scénario comprend alors des ordres de changement d'état permettant ce retour à l'état initial de tous les équipements.
Dans le cas d'un temps de réaction long, il signifie par exemple que l'utilisateur estime qu'il a atteint le niveau de confort désiré, sans que le scénario soit exécuté jusqu'à son terme. Ce cas peut notamment se produire lorsque des actionneurs de mouvement sont intégrés dans des équipements domotique de protection solaire dont le mouvement est lent, soit du fait de la nature de l'équipement, soit du fait d'une volonté d'ajustement progressif. Le niveau de confort optimum n'est pas nécessairement celui qui correspond à l'exécution complète du scénario. Dans ce cas, il est important que la commande d'arrêt d'exécution du scénario ne concerne que les actionneurs de mouvement, et il est important de ne provoquer aucun changement d'état sur les actionneurs d'éclairage.

Alternativement ou en complément à l'évaluation de la durée de réaction de l'utilisateur, l'adaptation de l'ordre d'arrêt d'exécution du scénario est réalisée en évaluant la durée T2 de l'appui d'arrêt sur la touche mécanique dans la sous-étape S83. Une durée d'appui d'arrêt courte, par exemple inférieur à 1 seconde, est interprétée comme devant simplement donner lieu à des ordres d'arrêt, tandis qu'une durée d'appui d'arrêt longue, par exemple supérieure à 1 seconde, est interprétée comme devant donner lieu non seulement à des ordres d'arrêt mais encore à des ordres permettant le retour à l'état initial.

## Revendications

1. Procédé de commande d'une installation (100) formée d'une pluralité d'équipements domotiques (11) liés à un bâtiment, et y assurant, selon le type d'équipement domotique, des fonctions de confort thermique et visuel, telles que des fonctions de chauffage-climatisation, de ventilation naturelle, d'éclairage, de protection solaire, et/ou des fonctions de sécurité, telles que des fonctions de fermetures et/ou d'alarme, les équipements domotiques communiquant sur un même réseau domotique, **caractérisé en ce qu'**il comprend:
- une étape de connexion à un outil de programmation (110), d'une télécommande programmable (20) munie d'un moyen de communication (21) avec le réseau domotique et munie d'une interface de commande (22) comprenant uniquement une ou plusieurs touches mécaniques (23, 24, 25), dont au moins une touche d'exécution de scénario (23, 24),
- une étape de découverte de l'installation, dans laquelle des identifiants des équipements domotiques de l'installation sont fournis à l'outil de programmation,
- une étape de définition, dans l'outil de programmation, d'un scénario de commande impliquant plusieurs équipements domotiques, dits équipements du scénario,
- une étape d'affectation du scénario de commande à une touche d'exécution de scénario (23, 24),
- une étape d'utilisation autonome de la télécommande programmable, dans laquelle il y a émission d'ordres de commande définis dans le scénario de commande, depuis la télécommande programmable vers les équipements du scénario, suite à un appui sur la touche d'exécution de scénario
et **en ce que** dans l'étape d'utilisation autonome de la télécommande, il y a émission, depuis la télécommande programmable (20) vers les équipements domotiques (11) du scénario, d'ordres d'arrêt d'exécution du scénario de commande lors d'un appui d'arrêt sur une touche mécanique d'exécution de scénario (23, 24) ayant lieu pendant une durée T0 d'exécution de scénario..

2. Procédé de commande selon la revendication 1, **caractérisé en ce que** dans l'étape de découverte, l'outil de programmation utilise le moyen de communication de la télécommande programmable pour émettre une requête de découverte et pour recevoir les identifiants des équipements domotiques fournis par les équipements domotiques de l'installation

3. Procédé de commande selon la revendication 1, **caractérisé en ce que** si la télécommande programmable comprend une touche spécifique, dédiée à l'émission d'ordres d'arrêt, l'appui d'arrêt sur cette touche provoque l'émission d'ordres d'arrêt, y compris après la durée d'exécution de scénario.

4. Procédé de commande selon la revendication 1, **caractérisé en ce que** les ordres d'arrêt d'exécution du scénario sont des ordres d'arrêt quand ils concernent un actionneur de mouvement d'un équipement domotique, et sont des ordres de changement d'état quand ils concernent un actionneur d'éclairage d'un équipement domotique.

5. Procédé de commande selon la revendication 1, **caractérisé en ce que** les ordres d'arrêt d'exécution du scénario sont adaptés selon la durée T1 séparant un début d'exécution et un appui d'arrêt et/ou selon la durée T2 de l'appui d'arrêt.

6. Procédé de commande selon l'une des revendications précédentes, **caractérisé en ce que** l'étape de définition du scénario de commande comprend :
- l'affichage, sur une interface graphique utilisateur de l'outil de programmation, d'icônes d'équipements et/ou de groupes d'équipements, chaque icône d'équipement étant représentative d'un des équipements domotiques dont l'outil de programmation a reçu les identifiants et chaque icône de groupe d'équipements étant représentative d'un groupe prédéfini d'équipements domotiques de même type dont l'outil de programmation a reçu les identifiants,
- la sélection d'un ordre de commande,
- la sélection d'une icône d'équipement, ou de plusieurs icônes d'équipement, ou d'une icône de groupe d'équipements,
- la formation d'une instruction de commande comprenant à la fois l'ordre de commande et l'identifiant de l'équipement domotique associé à l'icône d'équipement ou les identifiants des équipements domotiques associés aux icônes d'équipement ou de groupe d'équipements,
- l'enregistrement de l'instruction de commande dans une liste d'instructions de commande impliquant plusieurs équipements et constituant le scénario de commande.

7. Procédé de commande selon la revendication 6, **caractérisé en ce que** l'étape de définition de scénario comprend également l'affichage, sur l'interface graphique utilisateur, d'une icône de scénario affectée à la liste d'instructions constituant le scénario.

8. Procédé de commande selon l'une des revendications précédentes, **caractérisé en ce que** l'étape d'affectation du scénario de commande à l'une des touches d'exécution de scénario comprend :
- le transfert, depuis l'outil de programmation vers la télécommande programmable, du scénario de commande, et
- l'enregistrement du scénario de commande dans une mémoire de scénario de la télécommande programmable,
- ce transfert comprenant également un identifiant de la touche d'exécution de scénario et cet enregistrement utilisant l'identifiant de la touche d'exécution de scénario pour adresser la mémoire de scénario, quand la télécommande programmable comprend plus d'une touche d'exécution de scénario.

9. Procédé de commande selon les revendications 7 et 8, **caractérisé en ce que** le transfert du scénario de commande est précédé par une affectation virtuelle du scénario de commande à la touche d'exécution de scénario, comprenant :
- l'affichage d'une représentation des touches d'exécution de scénario sur l'interface graphique, en sus de l'icône de scénario, un bouton logiciel de l'interface graphique correspondant à chaque touche d'exécution de scénario,
- une sélection commune de l'icône de scénario et d'un bouton logiciel.

10. Procédé de commande selon la revendication 8, **caractérisé en ce qu'**une étape de connexion à un outil de programmation comprend le transfert d'un scénario de commande depuis la télécommande programmable vers l'outil de programmation lorsqu'une télécommande programmable a déjà subi une étape d'affectation du scénario de commande à l'une des touches d'exécution de scénario.

11. Procédé de commande selon l'une des revendications précédentes, **caractérisé en ce qu'**il comprend une étape préalable de transfert d'une clé d'authentification, commune à tous les équipements domotiques de l'installation, depuis une télécommande déjà présente dans l'installation vers la télécommande programmable.

12. Procédé de commande selon l'une des revendications précédentes, **caractérisé en ce que** la télécommande programmable comprend au plus deux touches d'exécution de scénario.

13. Télécommande programmable (20) munie d'un moyen de communication avec un réseau domotique d'une installation (100) formée d'une pluralité d'équipements domotiques (11) liés à un bâtiment, et y assurant, selon le type d'équipement domotique, des fonctions de confort thermique et visuel, telles que des fonctions de chauffage-climatisation, de ventilation naturelle, d'éclairage, de protection solaire et/ou des fonctions de sécurité, telles que des fonctions de fermeture et/ou d'alarme, ladite télécommande mettant en oeuvre le procédé selon l'une des revendications 1-13 et étant munie:
- de moyens de connexion avec un outil de programmation (110),
- de moyens de transmission sur le réseau domotique d'ordres de commande provenant de l'outil de programmation,
- de moyens d'enregistrement d'un scénario de commande dans une mémoire de scénario, suite à réception du scénario de commande depuis l'outil de programmation,
**caractérisée en ce qu'**elle est munie d'une interface de commande (22) comprenant uniquement une ou plusieurs touches mécaniques (23, 24, 25), dont au moins une touche d'exécution de scénario (23, 24), en relation avec la mémoire de scénario, et **en ce qu'**elle comprend des moyens logiques de traitement aptes à provoquer l'émission sur le réseau domotique d'ordres de commande contenus dans la mémoire de scénario en relation avec une touche d'exécution de scénario (23, 24) lors d'un appui sur une touche d'exécution de scénario et **en ce que** les moyens logiques de traitement sont de plus tels qu'un appui sur une touche mécanique provoque l'émission sur le réseau domotique d'ordres d'arrêt mettant fin à l'exécution du scénario, lors d'un appui d'arrêt sur une touche mécanique d'exécution de scénario (23, 24) ayant lieu pendant une durée T0 d'exécution de scénario.

14. Télécommande programmable selon la revendication 13, **caractérisée en ce que** les ordres d'arrêt mettant fin à l'exécution du scénario sont des ordres d'arrêt de mouvement adressés spécifiquement aux actionneurs de mouvement définis dans le scénario ou adressés à l'ensemble des actionneurs connus de la télécommande programmable.

15. Télécommande programmable selon la revendication 13, **caractérisée en ce que** les moyens logiques de traitement sont de plus tels que les ordres d'arrêt mettant fin à l'exécution du scénario sont des ordres de changement d'état quand ils sont émis vers des équipements domotiques d'éclairage.

16. Télécommande programmable selon la revendication 13, **caractérisé en ce que** les ordres d'arrêt d'exécution du scénario sont adaptés selon la durée T1 séparant un début d'exécution et un appui d'arrêt et/ou selon la durée T2 de l'appui d'arrêt.

17. Télécommande programmable selon la revendication 13, **caractérisée en ce qu'**elle comprend au plus deux touches d'exécution de scénario.

18. Télécommande programmable selon la revendication 13, **caractérisée en ce que** les moyens logiques de traitement sont de plus tels qu'un appui sur une touche d'exécution de scénario provoque l'émission sur le réseau domotique d'une commande spécifique, tant qu'aucun enregistrement d'ordres de commande n'a été réalisé dans la mémoire de scénario.

## Patentansprüche

1. Steuerverfahren einer Anlage (100), die von einer Vielzahl haustechnischer Ausrüstungen (11) gebildet ist, die mit einem Gebäude verbunden sind und dort je nach Art der haustechnischen Ausrüstung thermische und visuelle Komfortfunktionen sicherstellen wie Heizungs-, Klimatisierungs-, natürliche Lüftungs-, Beleuchtungs-, Sonnenschutzfunktionen und/oder Sicherheitsfunktionen wie Verschluss- und/oder Alarmfunktionen, wobei die haustechnischen Ausrüstungen über ein selbes haustechnisches Netzwerk kommunizieren, **dadurch gekennzeichnet, dass** es umfasst:
- einen Verbindungsschritt mit einem Programmierwerkzeug (110) einer programmierbaren Fernsteuerung (20), die mit einem Kommunikationsmittel (21) mit dem haustechnischen Netzwerk ausgestattet ist und mit einer Steuerschnittstelle (22) ausgestattet ist, die nur eine oder mehrere mechanische Tasten (23, 24, 25), davon mindestens eine Szenarioausführungstaste (23, 24), umfasst,
- einen Entdeckungsschritt der Anlage, bei welchem dem Programmierwerkzeug Identifikationen der haustechnischen Ausrüstungen der Anlage bereitgestellt werden,
- einen Definitionsschritt im Programmierwerkzeug eines Steuerszenarios, das mehrere haustechnische Ausrüstungen, als Szenarioausrüstungen bezeichnet, impliziert,
- einen Zuweisungsschritt des Steuerszenarios an eine Szenarioausführungstaste (23, 24),
- einen autonomen Verwendungsschritt der programmierbaren Fernsteuerung, bei dem nach einem Druck auf die Szenarioausführungstaste in dem Steuerszenario definierte Steuerbefehle von der programmierbaren Fernsteuerung zu den Szenarioausrüstungen gesendet werden,
und dass bei dem autonomen Verwendungsschritt der Fernsteuerung von der programmierbaren Fernsteuerung (20) zu den haustechnischen Ausrüstungen (11) des Szenarios bei einem Stoppdruck auf eine mechanische Szenarioausführungstaste (23, 24), der während einer Szenarioausführungsdauer T0 stattfindet, Stoppbefehle der Ausführung des Steuerszenarios gesendet werden.

2. Steuerverfahren nach Anspruch 1, **dadurch gekennzeichnet, dass** das Programmierwerkzeug im Entdeckungsschritt das Kommunikationsmittel der programmierbaren Fernsteuerung verwendet, um eine Entdeckungsanfrage zu senden und um die Identifikationen der haustechnischen Ausrüstungen zu empfangen, die von den haustechnischen Ausrüstungen der Anlage bereitgestellt werden.

3. Steuerverfahren nach Anspruch 1, **dadurch gekennzeichnet, dass**, wenn die programmierbare Fernsteuerung eine spezielle Taste umfasst, die zum Senden von Stoppbefehlen bestimmt ist, der Stoppdruck auf diese Taste auch nach der Ausführungsdauer des Szenarios das Senden von Stoppbefehlen veranlasst.

4. Steuerverfahren nach Anspruch 1, **dadurch gekennzeichnet, dass** die Szenarioausführungs-Stoppbefehle Stoppbefehle sind, wenn sie einen Bewegungsaktuator einer haustechnischen Ausrüstung betreffen, und Zustandsveränderungsbefehle sind, wenn sie einen Beleuchtungsaktuator einer haustechnischen Ausrüstung betreffen.

5. Steuerverfahren nach Anspruch 1, **dadurch gekennzeichnet, dass** die Szenarioausführungs-Stoppbefehle an die Dauer T1, die einen Ausführungsanfang und einen Stoppdruck trennt, und/oder an die Dauer T2 des Stoppdrucks angepasst sind.

6. Steuerverfahren nach einem der vorangehenden Ansprüche, **dadurch gekennzeichnet, dass** der Definitionsschritt des Steuerszenarios umfasst:
- die Anzeige von Icons von Ausrüstungen und/oder von Ausrüstungsgruppen auf einer grafischen Benutzerschnittstelle des Programmierwerkzeugs, wobei jedes Ausrüstungsicon für eine der haustechnischer Ausrüstungen repräsentativ ist, von denen das Programmierwerkzeug die Identifikationen erhalten hat, und jedes Ausrüstungsgruppenicon für eine vorbestimmte Gruppe haustechnischer Ausrüstungen gleichen Typs repräsentativ ist, von der das Programmierwerkzeug die Identifikationen erhalten hat,
- die Auswahl eines Steuerbefehls,
- die Auswahl eines Ausrüstungsicons oder mehrerer Ausrüstungsicons oder eines Ausrüstungsgruppenicons,
- die Bildung einer Steuerinstruktion, die sowohl den Steuerbefehl und die Identifikation der dem Ausrüstungsicon zugeordneten haustechnischen Ausrüstung oder die Identifikationen der den Ausrüstungs- oder Ausrüstungsgruppenicons zugeordneten haustechnischen Ausrüstungen umfasst,
- die Registrierung der Steuerinstruktion in einer Steuerinstruktionsliste, die mehrere Ausrüstungen impliziert und das Steuerszenario bildet.

7. Steuerverfahren nach Anspruch 6, **dadurch gekennzeichnet, dass** der Definitionsschritt des Szenarios ebenfalls die Anzeige eines Szenarioicons auf der grafischen Benutzerschnittstelle umfasst, das der Liste der Instruktionen zugeordnet ist, die das Szenario bilden.

8. Steuerverfahren nach einem der vorangehenden Ansprüche, **dadurch gekennzeichnet, dass** der Zuweisungsschritt des Steuerszenarios an eine der Szenarioausführungstasten umfasst:
- die Übertragung des Steuerszenarios vom Programmierwerkzeug an die programmierbare Fernsteuerung und
- die Registrierung des Steuerszenarios in einem Szenariospeicher der programmierbaren Fernsteuerung,
- wobei diese Übertragung ebenfalls eine Identifikation der Szenarioausführungstaste umfasst und diese Registrierung die Identifikation der Szenarioausführungstaste verwendet, um den Szenariospeicher zu adressieren, wenn die programmierbare Fernsteuerung mehr als eine Szenarioausführungstaste umfasst.

9. Steuerverfahren nach den Ansprüchen 7 und 8, **dadurch gekennzeichnet, dass** der Übertragung des Steuerszenarios eine virtuelle Zuweisung des Steuerszenarios an die Szenarioausführungstaste vorausgeht, umfassend:
- die Anzeige einer Darstellung der Szenarioausführungstasten auf der grafischen Schnittstelle zusätzlich zum Szenarioicon, wobei jeder Szenarioausführungstaste ein Softwareknopf der grafischen Schnittstelle entspricht,
- eine gemeinsame Auswahl des Szenarioicons und eines Softwareknopfs.

10. Steuerverfahren nach Anspruch 8, **dadurch gekennzeichnet, dass** ein Verbindungsschritt mit einem Programmierwerkzeug die Übertragung eines Steuerszenarios von der programmierbaren Fernsteuerung an das Programmierwerkzeug umfasst, wenn eine programmierbare Fernsteuerung bereits einen Zuweisungsschritt des Steuerszenarios an eine der Szenarioausführungstasten absolviert hat.

11. Steuerverfahren nach einem der vorangehenden Ansprüche, **dadurch gekennzeichnet, dass** es einen von einer in der Anlage bereits vorhandene Fernsteuerung an die programmierbare Fernsteuerung vorherigen Übertragungsschritt eines Authentifizierungsschlüssels umfasst, der allen haustechnischen Ausrüstungen der Anlage gemeinsam ist.

12. Steuerverfahren nach einem der vorangehenden Ansprüche, **dadurch gekennzeichnet, dass** die programmierbare Fernsteuerung höchsten zwei Szenarioausführungstasten umfasst.

13. Programmierbare Fernsteuerung (20), die mit einem Kommunikationsmittel mit einem haustechnischen Netzwerk einer Anlage (100) ausgestattet ist, die von einer Vielzahl haustechnischer Ausrüstungen (11) gebildet ist, die mit einem Gebäude verbunden sind und dort je nach Art der haustechnischen Ausrüstung thermische und visuelle Komfortfunktionen sicherstellen wie Heizungs-, Klimatisierungs-, natürliche Lüftungs-, Beleuchtungs-, Sonnenschutzfunktionen und/oder Sicherheitsfunktionen wie Verschluss- und/oder Alarmfunktionen, wobei die Fernsteuerung das Verfahren nach einem der Ansprüche 1 bis 13 umsetzt und ausgestattet ist mit:
- Verbindungsmitteln mit einem Programmierwerkzeug (110),
- Übertragungsmitteln von Steuerbefehlen vom Programmierwerkzeug über das haustechnische Netzwerk,
- Registrierungsmitteln eines Steuerszenarios in einem Szenariospeicher nach Empfang des Steuerszenarios vom Programmierwerkzeug,
**dadurch gekennzeichnet, dass** sie mit einer Steuerschnittstelle (22) ausgestattet ist, die nur eine oder mehrere mechanische Tasten (23, 24, 25) umfasst, davon mindestens eine Szenarioausführungstaste (23, 24) in Verbindung mit dem Szenariospeicher, und dass sie logische Verarbeitungsmittel umfasst, die imstande sind, in Verbindung mit einer Szenarioausführungstaste (23, 24) bei einem Druck auf eine Szenarioausführungstaste das Senden von im Szenariospeicher enthaltenen Steuerbefehlen über das haustechnische Netzwerk zu veranlassen und dass die logischen Verarbeitungsmittel zusätzlich derart sind, dass ein Druck auf eine mechanische Taste bei einem Stoppdruck auf eine mechanische Szenarioausführungstaste (23, 24) während einer Szenarioausführungsdauer T0 das Senden von Stoppbefehlen über das haustechnische Netzwerk veranlasst, die die Ausführung des Szenarios beenden.

14. Programmierbare Fernsteuerung nach Anspruch 13, **dadurch gekennzeichnet, dass** die Stoppbefehle, die die Ausführung des Szenarios beenden, Bewegungsstoppbefehle sind, die speziell an die Bewegungsaktuatoren adressiert sind, die in dem Szenario definiert sind, oder an alle der programmierbaren Fernsteuerung bekannten Aktuatoren adressiert sind.

15. Programmierbare Fernsteuerung nach Anspruch 13, **dadurch gekennzeichnet, dass** die logischen Verarbeitungsmittel zusätzlich derart sind, dass die Stoppbefehle, die die Ausführung des Szenarios beenden, Zustandsänderungsbefehle sind, wenn sie an haustechnische Beleuchtungsausrüstungen gesendet werden.

16. Programmierbare Fernsteuerung nach Anspruch 13, **dadurch gekennzeichnet, dass** die Szenarioausführungs-Stoppbefehle an die Dauer T1, die einen Ausführungsanfang und einen Stoppdruck trennt, und/oder an die Dauer T2 des Stoppdrucks angepasst sind.

17. Programmierbare Fernsteuerung nach Anspruch 13, **dadurch gekennzeichnet, dass** sie höchsten zwei Szenarioausführungstasten umfasst.

18. Programmierbare Fernsteuerung nach Anspruch 13, **dadurch gekennzeichnet, dass** die logischen Verarbeitungsmittel zusätzlich derart sind, dass ein Druck auf eine Szenarioausführungstaste das Senden eines Sonderbefehls über das haustechnische Netzwerk bewirkt, solange keine Registrierung von Steuerbefehlen im Szenariospeicher vorgenommen wurde.

## Claims

1. A method of controlling an installation (100) formed by a plurality of home automation equipment items (11) linked to a building, and handling therein, depending on the type of home automation equipment item, thermal and visual comfort functions, such as heating and air conditioning, natural ventilation, lighting, solar protection functions, and/or security functions, such as closure and/or alarm functions, the home automation equipment items communicating over one and the same home automation network, **characterized in that** it comprises:
- a step for connecting, to a programming tool (110), a programmable remote control (20) provided with a means of communication (21) with the home automation network and provided with a command interface (22) comprising only one or more mechanical keys (23, 24, 25), including at least one scenario execution key (23, 24),
- an installation discovery step, in which identifiers of the home automation equipment items of the installation are supplied to the programming tool,
- a step for defining, in the programming tool, a control scenario involving a number of home automation equipment items, called scenario equipment items,
- a step for assigning the control scenario to a scenario execution key (23, 24),
- a step for the standalone use of the programmable remote control, in which control commands defined in the control scenario are sent, from the programmable remote control to the scenario equipment items, following a press on the scenario execution key
and **in that**, in the step for standalone use of the programmable remote control, commands to stop execution of the control scenario are sent, from the programmable remote control (20) to the home automation equipment items (11) of the scenario, in the event of a stop press on a mechanical scenario execution key (23, 24) taking place during a scenario execution duration T0.

2. The control method as claimed in claim 1, **characterized in that**, in the discovery step, the programming tool uses the communication means of the programmable remote control to send a discovery request and to receive the identifiers of the home automation equipment items supplied by the home automation equipment items of the installation.

3. The control method as claimed in claim 1, **characterized in that**, if the programmable remote control has a specific key, dedicated to the sending of stop commands, the stop press on this key causes stop commands to be sent, including after the scenario execution duration.

4. The control method as claimed in claim 1, **characterized in that** the scenario execution stop commands are stop commands when they relate to a movement actuator of a home automation equipment item, and are state change commands when they relate to a lighting actuator of a home automation equipment item.

5. The control method as claimed in claim 1, **characterized in that** the scenario execution stop commands are adapted according to the time T1 separating an execution start and a stop press and/or according to the duration T2 of the stop press.

6. The control method as claimed in one of the preceding claims, **characterized in that** the step for defining the control scenario comprises:
- the display, on a graphical user interface of the programming tool, of equipment and/or equipment group icons, each equipment icon being representative of one of the home automation equipment items for which the programming tool has received the identifiers and each equipment group icon being representative of a predefined group of home automation equipment items of the same type for which the programming tool has received the identifiers,
- the selection of a control command,
- the selection of an equipment icon, or of several equipment icons, or of an equipment group icon,
- the formation of a control instruction comprising both the control command and the identifier of the home automation equipment item associated with the equipment icon or the identifiers of the home automation equipment items associated with the equipment or equipment group icons,
- the storage of the control instruction in a list of control instructions involving several equipment items and constituting the control scenario.

7. The control method as claimed in claim 6, **characterized in that** the scenario definition step also includes the display, on the graphical user interface, of a scenario icon assigned to the list of instructions constituting the scenario.

8. The control method as claimed in one of the preceding claims, **characterized in that** the step for assigning the control scenario to one of the scenario execution keys comprises:
- the transfer, from the programming tool to the programmable remote control, of the control scenario, and
- the storage of the control scenario in a scenario memory of the programmable remote control,
- this transfer also including an identifier of the scenario execution key and this storage using the identifier of the scenario execution key to address the scenario memory, when the programmable remote control has more than one scenario execution key.

9. The control method as claimed in claims 7 and 8, **characterized in that** the transfer of the control scenario is preceded by a virtual assignment of the control scenario to the scenario execution key, comprising:
- the display of a representation of the scenario execution keys on the graphical interface, in addition to the scenario icon, a graphical interface software button corresponding to each representation of a scenario execution key,
- a common selection of the scenario icon and of a software button.

10. The control method as claimed in claim 8, **characterized in that** a step for connecting to a programming tool includes the transfer of a control scenario from the programmable remote control to the programming tool when a programmable remote control has already undergone a step for assigning the control scenario to one of the scenario execution keys.

11. The control method as claimed in one of the preceding claims, **characterized in that** it includes a preliminary step for transferring an authentication key, common to all the home automation equipment items of the installation, from a remote control already present in the installation to the programmable remote control.

12. The control method as claimed in one of the preceding claims, **characterized in that** the programmable remote control has at most two scenario execution keys.

13. A programmable remote control (20) provided with a means of communication with a home automation network of an installation (100) formed by a plurality of home automation equipment items (11) linked to a building, and handling therein, depending on the type of home automation equipment item, thermal and visual comfort functions, such as heating and air conditioning, natural ventilation, lighting, solar protection functions and/or security functions, such as closure and/or alarm functions, said remote control implementing the method as claimed in one of claims 1 to 13 and being provided with:
- means for connecting with a programming tool (110),
- means for transmitting over the home automation network control commands originating from the programming tool,
- means for storing a control scenario in a scenario memory, following receipt of the control scenario from the programming tool, **characterized in that** it is provided with a control interface (22) comprising only one or more mechanical keys (23, 24, 25) including at least one scenario execution key (23, 24), related to the scenario memory, and **in that** it comprises processing logic means able to provoke the sending over the home automation network of control commands contained in the scenario memory related to a scenario execution key in the event of a press on a scenario execution key (23, 24) and **in that** the processing logic means are, in addition, such that a press on a mechanical key provokes the sending over the home automation network of stop commands terminating the execution of the scenario, in the event of a stop press on a mechanical scenario execution key (23, 24) taking place during a scenario execution duration TO.

14. The programmable remote control as claimed in claim 13, **characterized in that** the stop commands terminating the execution of the scenario are movement stop commands addressed specifically to the movement actuators defined in the scenario or addressed to all the actuators known to the programmable remote control.

15. The programmable remote control as claimed in claim 13, **characterized in that** the processing logic means are, in addition, such that the stop commands terminating the execution of the scenario are state change commands when they are sent to lighting home automation equipment items.

16. The programmable remote control as claimed in claim 13, **characterized in that** the scenario execution stop commands are adapted according to the duration T1 separating a start of execution and a stop press and/or according to the duration T2 of the stop press.

17. The programmable remote control as claimed in claim 13, **characterized in that** it has at most two scenario execution keys.

18. The programmable remote control as claimed in claim 13, **characterized in that** the processing logic means are, in addition, such that a press on a scenario execution key provokes the sending over the home automation network of a specific command, as long as no control commands have been stored in the scenario memory.
